# DEMANDE DE BREVET EUROPEEN

(11) **EP 4 640 656 A1**
(43) Date de publication de la demande: **29.10.2025**
(21) Numéro de dépôt: 24171993.9
(22) Date de dépôt: 23.04.2024
(51) Int. Cl.: C04B 41/00, C04B 41/50, C04B 41/52, C04B 41/86, C04B 41/89, C04B 41/91, C23D 5/06, G04B 45/00, C04B 111/00, C04B 111/80

(54) **PROCÉDÉ DE GRAVAGE ET TEXTURATION D'UN ÉMAIL**

(71) Demandeur: Comadur S.A., 2400 Le Locle (CH)
(72) Inventeur: ROMAND, Johan, 25620 Mamirolle (FR); COMBOTTE, Bastien, 25130 Villers-Le-Lac (FR); VUILLE, Pierry, 2338 Les Emibois (CH); RICHERT, Geoffrey, 25500 Morteau (FR)
(74) Mandataire: ICB SA

(57) **Abrégé**

L'invention concerne un procédé de gravage et texturation d'un article (1) comprenant un décor (2) rempli au moins partiellement avec un émail (3), ledit procédé comprenant une étape d'ablation laser à l'aide d'un laser femtoseconde ou picoseconde en surface de l'émail (3) et/ou au sein de l'émail (3) pour réaliser une structure (7).

## Description

### Domaine technique de l'invention

L'invention concerne un procédé de gravage et de texturation d'un article avec un décor en émail, par exemple un décor en émail plique-à-jour. L'invention se rapporte également au procédé de fabrication de l'article et à l'article issu de ce procédé.

### Arrière-plan technologique

Plusieurs techniques ancestrales permettent d'obtenir des décors sur des pierres translucides ou des pâtes de verre. On retrouve beaucoup de réalisations d'intaille à la période antique, que ce soit dans des pierres semi-précieuses ou dans des pâtes de verre. Le décor est ainsi obtenu par taillage et polissage manuel et dans certains cas par moulage pour les pâtes de verre. Le décor est réalisé soit sur le dessus pour la plus grande majorité des objets retrouvés et, en de rares exemples, par le dessous, ce qui donne un effet d'hologramme.

Le gravage intra-matière est utilisé depuis quelques années dans l'industrie horlogère. Il permet par exemple de réaliser des marquages anti-contrefaçon ou d'intégrer un filagramme décoratif dans une glace saphir. On retrouve aussi cette application dans la personnalisation d'objets de décoration en crystal ou en polycarbonate.

A ce jour, le gravage de l'émail est peu répandu car cela nécessite de maîtriser la technique de gravage pour éviter de dégrader l'état de surface de l'émail et d'altérer la couleur de l'émail.

### Résumé de l'invention

La présente invention vise à mettre au point un procédé de gravage et texturation pour l'émail palliant les inconvénients précités.

Le procédé est d'application pour tout décor en émail et en particulier pour un décor en émail plique-à-jour, c.à.d. pour un décor débouchant en émail, où l'effet rendu est celui d'un vitrail miniature avec la lumière filtrant à travers l'émail transparent ou translucide. Il est plus spécifiquement d'application sur un décor en émail plique-à-jour ayant une épaisseur supérieure ou égale à 0.5 mm de manière à réduire la fragilité de l'émail, ce qui est d'autant plus important pour des décors en émail fortement sollicités comme par exemple pour des composants extérieurs d'habillage horloger tels des lunettes de montre.

Plus spécifiquement, l'invention se rapporte à un procédé de gravage et texturation d'un article comprenant un décor rempli au moins partiellement avec un émail, ledit procédé comprenant une étape d'ablation laser à l'aide d'un laser femtoseconde ou picoseconde en surface de l'émail et/ou au sein de l'émail pour réaliser une structure.

Le procédé de gravage et texturation selon l'invention permet de réaliser une ablation laser tout en maîtrisant l'état de surface et en limitant l'altération de la couleur de l'émail.

En amont de ce procédé de gravage et texturation, l'article avec un décor en émail plique-à-jour peut être réalisé grâce à un procédé de fabrication permettant de déposer des couches épaisses d'émail en un temps restreint menant à une industrialisation en grande série à faibles coûts avec une robustesse de l'émail accrue.

A cet effet, il est proposé un procédé de fabrication d'un article comprenant un décor débouchant rempli au moins partiellement avec l'émail pour former l'émail dit plique-à-jour, le procédé de fabrication comprenant les étapes de gravage et texturation et comprenant avant ou pendant lesdites étapes de gravage et texturation les étapes de :
- Mise à disposition d'une ébauche définie avec une face supérieure et avec une face inférieure opposée à la face supérieure ;
- Ablation d'une partie de l'ébauche au niveau de la face supérieure pour réaliser un décor qui est non débouchant sur la face inférieure ou, en alternative, à l'étape précédente, mise à disposition de ladite ébauche directement munie du décor non débouchant ;
- Dépôt d'une ou plusieurs couches d'émail au sein du décor non débouchant et cuisson de l'émail après chaque dépôt de couche ;
- Usinage, de préférence par meulage, de la face inférieure pour révéler l'émail et ainsi réaliser l'article avec le décor débouchant rempli d'émail.

Ce procédé est très reproductible et permet des grands volumes de production pour des coûts très limités. Les formes complexes sont seulement limitées par la résistance des matériaux du substrat lors de la cuisson ou de chocs.

Ce procédé permet de déposer des couches épaisses d'émail, ce qui permet d'obtenir un émail avec une épaisseur totale supérieure ou égale à 0.5 mm avec un nombre limité de couches, typiquement inférieur à 10. Cette épaisseur plus importante de l'émail par rapport à celle des émaux de l'art antérieur permet de réduire sa fragilité, et par là-même de réaliser des composants d'habillage extérieur, tels que des lunettes, qui sont soumis à de fortes sollicitations.

Le décor en émail transparent avec gravage va créer une profondeur qu'il n'est aujourd'hui pas possible d'obtenir.

### Brève description des figures

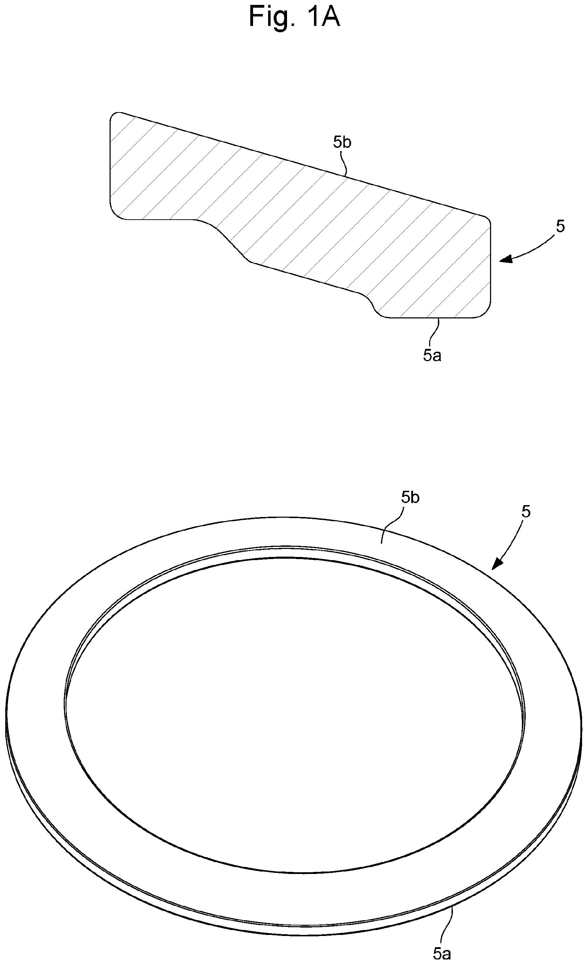

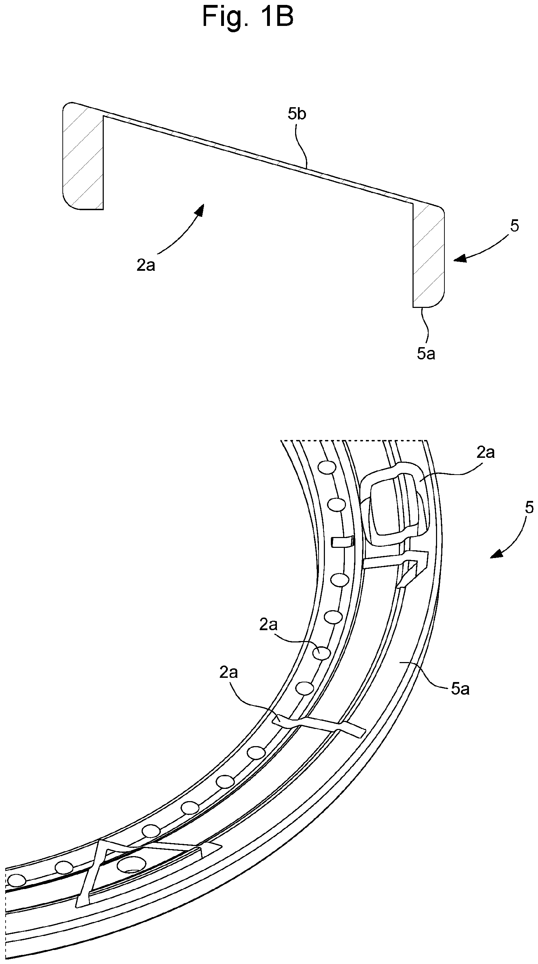

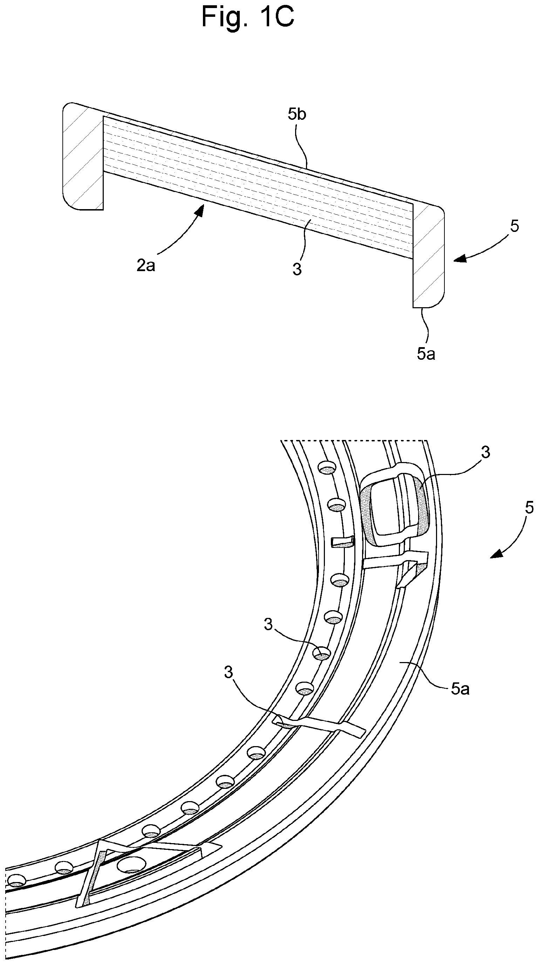

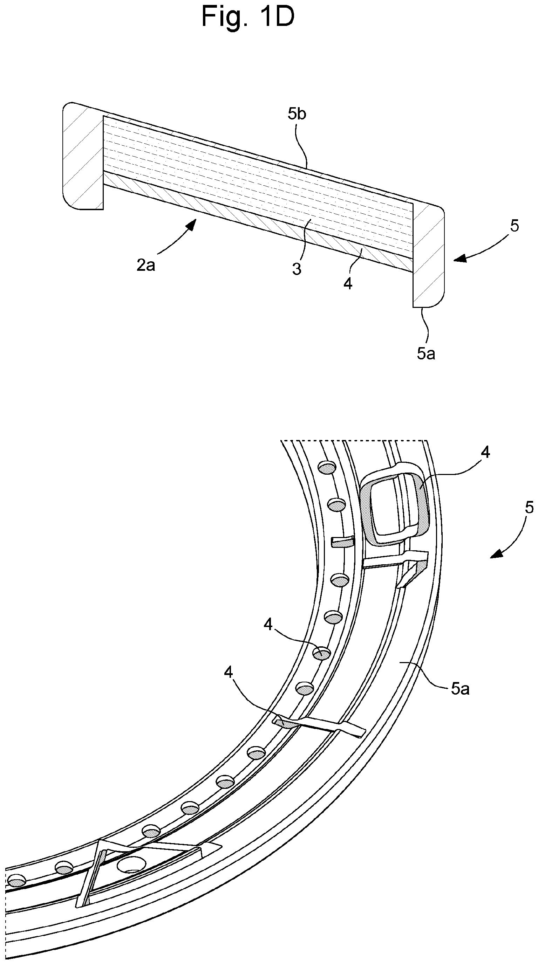

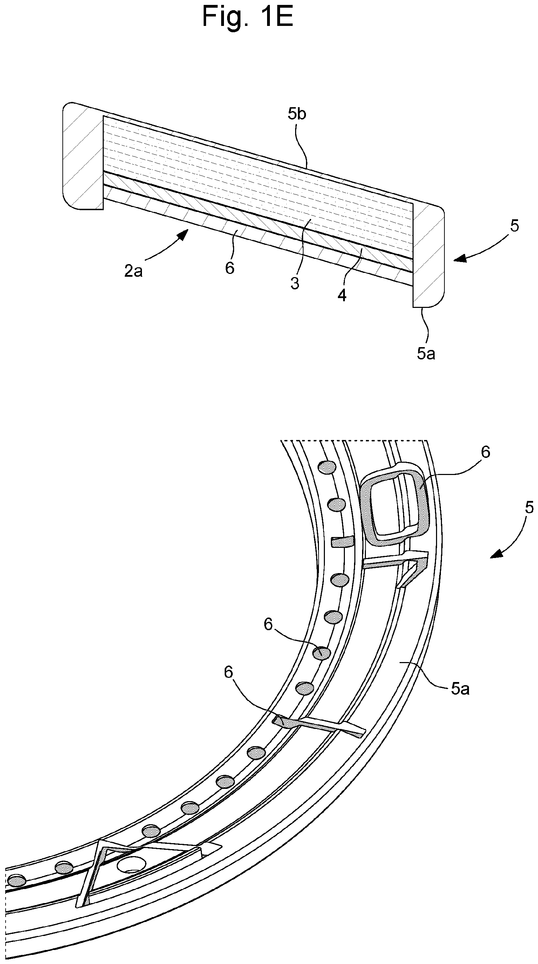

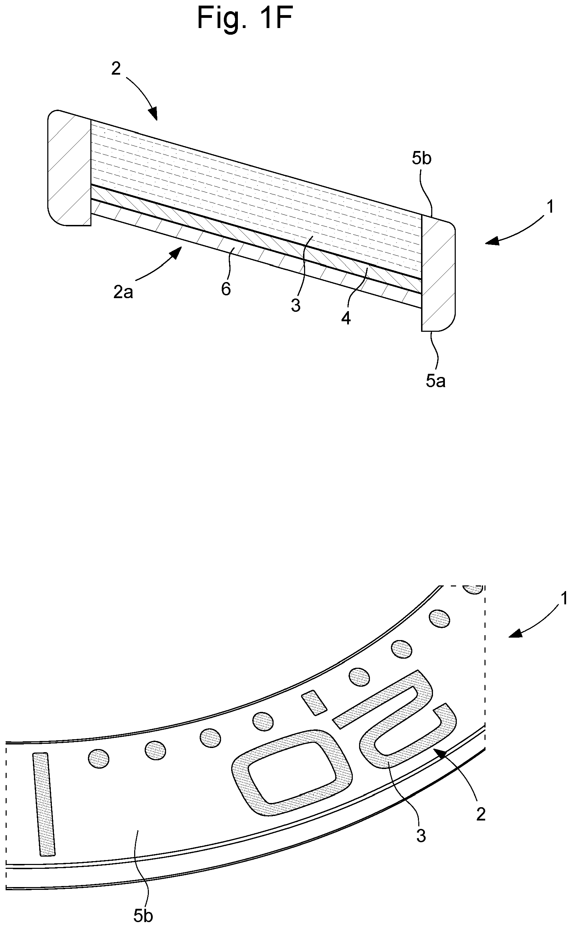

Les figures 1A à 1F représentent les 6 étapes d'une première variante du procédé de fabrication d'un article, à savoir une lunette, avec un décor en émail selon l'invention. Pour chaque figure, une vue schématique en coupe d'une partie de l'article ou de l'ébauche et une vue tridimensionnelle d'une partie de l'article ou de l'ébauche sont représentées. Les vues tridimensionnelles des figures 1A et 1F sont des vues depuis le dessus de l'ébauche ou de l'article respectivement tandis que les vues 1B à 1E sont des vues depuis le dessous de l'ébauche.

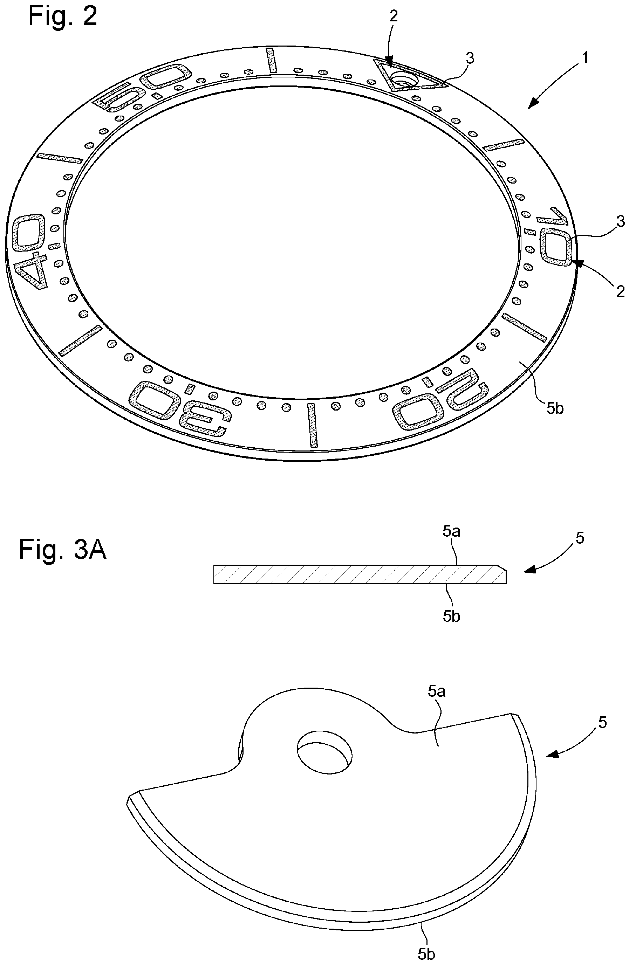

La figure 2 est une vue tridimensionnelle de la lunette issue du procédé de fabrication selon la première variante.

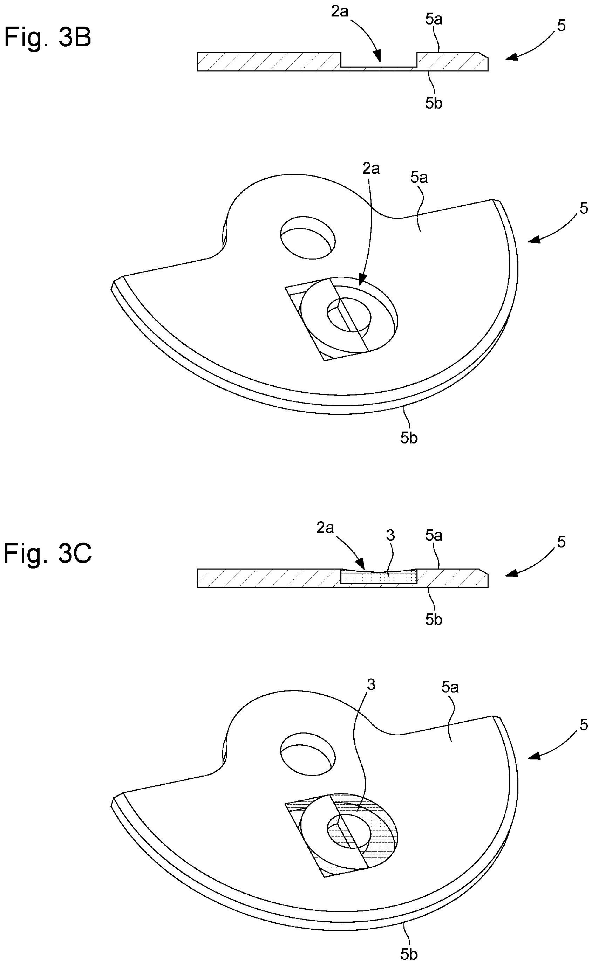

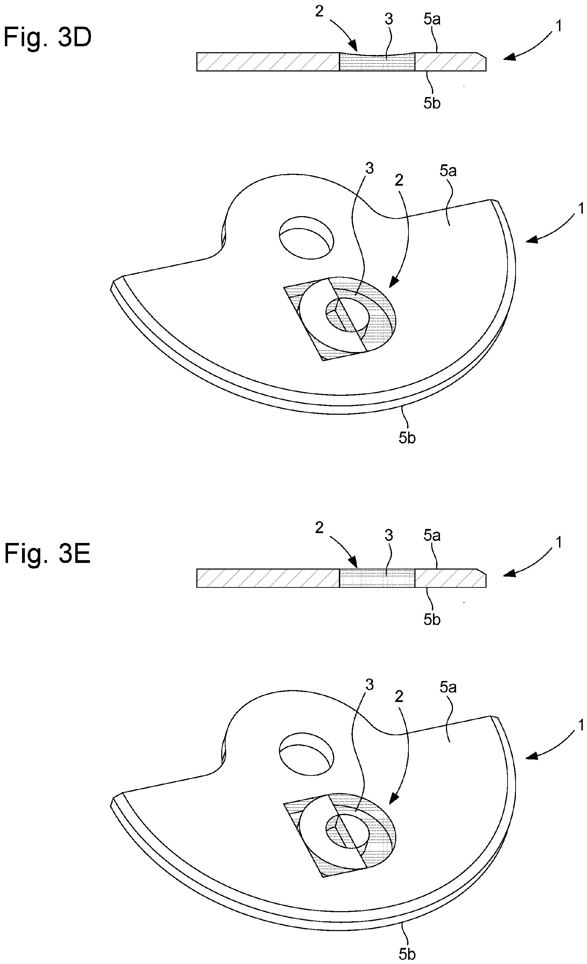

Les figures 3A à 3E représentent les 5 étapes d'une deuxième variante du procédé de fabrication d'un article, à savoir une masse oscillante, avec un décor en émail selon l'invention. Pour chaque figure, une vue schématique en coupe d'une partie de l'article ou de l'ébauche et une vue tridimensionnelle d'une partie de l'article ou de l'ébauche sont représentées.

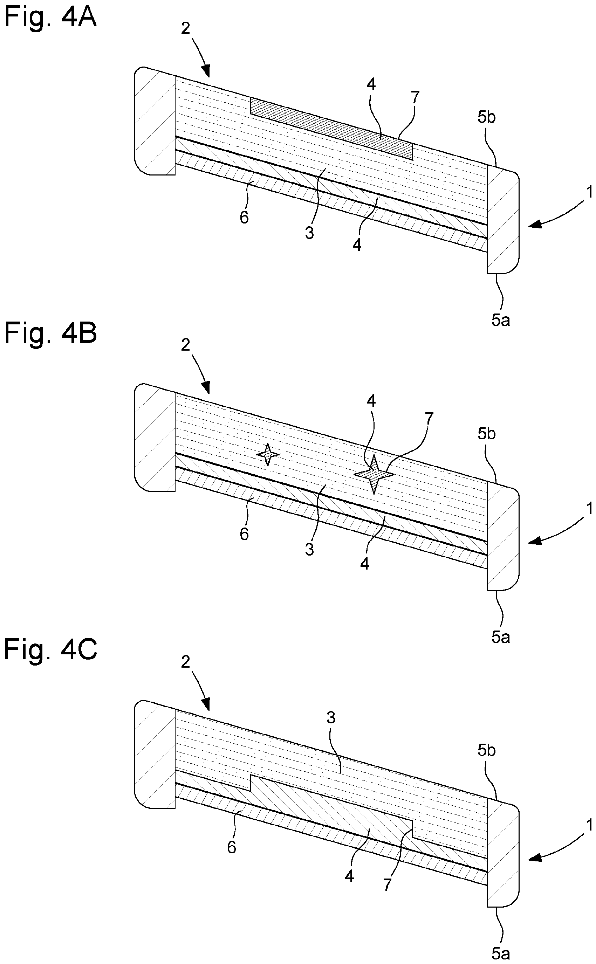

Les figures 4A à 4C représentent avec des vues schématiques en coupe de l'article, le procédé de gravage et de texturation d'un article avec un décor en émail, obtenu par exemple avec la première variante du procédé de fabrication selon l'invention.

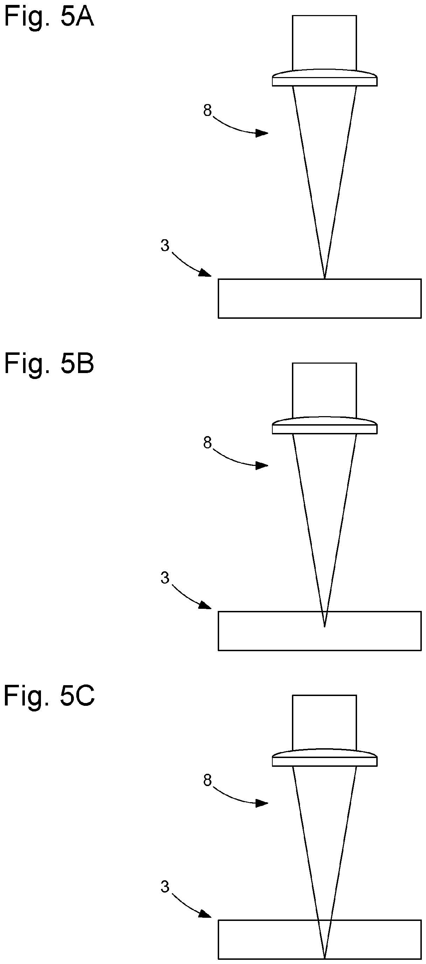

Les figures 5A à 5C sont des vues schématiques de l'étape de gravage et texturation du décor en émail par ablation laser. A la figure 5A, le gravage est réalisé à la surface de l'émail tandis qu'à la figure 5B, il est réalisé au sein de l'émail. A la figure 5C, il est réalisé sur la face opposée au point d'entrée du faisceau laser.

### Description détaillée de l'invention

L'invention concerne un procédé de gravage et texturation d'un décor en émail d'un article. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran et une aiguille. Le procédé est particulièrement bien adapté pour réaliser des articles soumis à de fortes sollicitations tels qu'un composant d'habillage extérieur. Il peut également s'agir d'un composant du mouvement tel qu'une masse oscillante. Ci-après, l'invention sera plus spécifiquement décrite pour une lunette et pour une masse oscillante.

Le procédé de gravage et texturation est d'application pour tout décor en émail. Il peut s'agir d'un décor débouchant ou non débouchant. Le décor peut être entièrement rempli d'émail ou rempli d'émail et d'une autre matière telle que, par exemple, une matière luminescente. Dans le cas d'un décor débouchant rempli au moins partiellement avec de l'émail, on parlera d'un décor en émail plique-à-jour.

Le procédé de gravage et texturation selon l'invention est réalisé par ablation laser au sein de l'émail ou en surface de l'émail. Par abus de langage, on parlera de gravage lorsqu'il s'agit de créer un logement avec typiquement une profondeur de plusieurs dixièmes de millimètres et de texturation pour un gravage moins profond avec une profondeur de quelques centièmes de millimètre. Par souci de simplicité, on parlera ci-après de manière générale de gravage, que ce soit pour du gravage ou pour de la texturation.

Un laser à impulsion très courte est utilisé pour réaliser ces gravages. L'ordre de grandeur peut aller de la picoseconde à la femtoseconde. Typiquement, la gamme de valeurs est comprise entre 250 et 500 femtosecondes.

Il est possible d'utiliser des longueurs d'ondes proche infra-rouge à savoir entre 700 et 2500 nm, et vertes, à savoir entre 510 et 560 nm. Il est également possible d'utiliser un laser UV, avec donc une longueur d'ondes comprise entre 200 et 400 nm, cette technologie étant particulièrement adaptée pour des gravures fines.

La gravure intra-émail s'obtient en focalisant le faisceau 8 dans l'émail 3 comme schématisé à la figure 5B et en générant une matrice d'impacts tandis que la gravure en surface nécessite de se focaliser proche de la surface pour ablater la matière comme schématisé à la figure 5A. Typiquement, pour la gravure intra-émail la longueur d'ondes est de 1030 nm, c.à.d. dans le proche infra-rouge et pour la gravure en surface elle est de 515 nm, c.à.d. dans le vert. Pour le laser UV, la longueur d'ondes est typiquement de 355 nm.

Typiquement, l'énergie du faisceau est comprise entre 10 µJ et 30 µJ et la fréquence entre 200 KHz et 1000 KHz.

Pour la gravure en surface de l'émail, il est possible de graver directement la face supérieure de la pièce par le dessus mais il est aussi possible de graver la face du dessous en "bottom-up". Cette stratégie consiste à traverser le matériau transparent sans générer d'interaction et en focalisant le faisceau 8 sur la face inférieure pour enlever de la matière comme schématisé à la figure 5C. Dans le cas d'un émail translucide/transparent, la gravure sur la face inférieure va créer un effet de profondeur, voire d'hologramme, depuis la face supérieure. Il est possible d'ajouter une matière, et en particulier une matière luminescente, pour accentuer l'effet de profondeur dans le cas du gravage par le dessous. Dans le cas d'une ablation laser sur la face supérieure, il va ensuite être possible de venir déposer un décor d'une autre matière, par exemple de la laque, du métal incrusté ou même un autre émail. Il est par exemple possible de réaliser une matrice en émail transparent dans laquelle on vient ensuite déposer un émail opaque.

Les différentes localisations au sein ou en surface de l'émail 3 sont illustrées aux figures 4A à 4C. Aux figures 4A et 4C, le gravage 7, aussi appelé structure ci-après, est réalisé sur une des faces de l'émail 3 au sein du décor 2 qui est débouchant dans l'exemple illustré. Lorsque le gravage est réalisé en surface, la structure peut être remplie avec une matière 4 qui peut, à titre d'exemple, être une matière luminescente. Il pourrait également s'agir d'un autre émail, par exemple un émail d'une autre couleur ou d'une opacité différente. A la figure 4B, le gravage 7 est réalisé au sein de l'émail 3. Il est envisageable de remplir la structure 7 avec de la matière 4 si le gravage est réalisé entre le dépôt des différentes couches d'émail 3 lors du procédé de fabrication du décor en émail. Si le gravage 7 est réalisé après le dépôt des couches d'émail, la gravure formera simplement une structure au sein de l'émail.

Préalablement ou pendant le gravage et la texturation, l'article avec le décor en émail peut être fabriqué avec différents procédés. Le procédé de fabrication sera décrit ci-après pour deux variantes préférées qui permettent de réaliser un décor en émail plique-à-jour avec une épaisseur d'émail supérieure ou égale à 0.5 mm pour un temps de cycle restreint. On comprendra que d'autres procédés de fabrication sont envisageables.

Les procédés de fabrication décrits ci-après sont adaptés pour tout substrat ayant un point de fusion plus élevé que celui de la température de cuisson de l'émail qui est typiquement comprise entre 650°C et 1100°C selon la composition de l'émail. Le procédé est particulièrement bien adapté pour un substrat en matériau dur comme de la céramique telle que du nitrure de silicium, de l'oxyde de zirconium ou de l'oxyde d'aluminium, comme un saphir ou encore comme un cermet. Certains céramiques, particulièrement le ZrO₂, ont une excellente adhérence mécano-chimique avec l'émail, et leurs coefficients de dilatation sont très proches, ainsi l'article ajouré conserve une excellente résistance mécanique. Ces matériaux supportent bien les cycles de cuisson pouvant aller jusqu'à plus de 1000°C, pour de l'émail grand feu par exemple, et résistent aux chocs thermiques pour effectuer des cycles de cuisson rapides.

Le procédé de fabrication selon une variante est illustré aux figures 3A à 3E en 5 étapes de a) à e) pour une masse oscillante. Dans une première étape a), l'article sans décor, qu'on qualifiera d'ébauche 5 ou de substrat, est mis à disposition. L'ébauche est définie avec une face supérieure 5a et une face inférieure 5b opposée à la face supérieure 5a. La face supérieure 5a pourra indifféremment être la face destinée à être tournée vers l'observateur en utilisation ou la face opposée. Dans une deuxième étape b), un décor non débouchant 2a est réalisé depuis la face supérieure 5a. Le décor non débouchant peut, par exemple, être réalisé par ablation laser. Eventuellement, cette étape b) peut être omise avec dans l'étape a) une ébauche munie du décor non débouchant 2a mise directement à disposition, cette ébauche étant, par exemple, réalisée par injection. Dans une troisième étape c), l'émail 3 est déposé au sein du décor non débouchant 2a. Idéalement, le dépôt est réalisé par sprayage liquide en vue d'une réalisation industrielle. En variante, il peut s'agir d'une dépose manuelle rapide au pinceau ou d'une dépose par saupoudrage d'une poudre. L'ébauche 5 est ensuite cuite pour vitrifier l'émail déposé. Préférablement, plusieurs couches d'émail sont déposées avec, après chaque étape de dépôt, un cycle de cuisson de manière à garantir l'absence de bulles dans l'émail. Il est envisageable de déposer des couches d'émail de couleurs différentes et/ou de faire varier la couleur de l'émail déposé pour chaque couche. Le nombre de couches d'émail déposées est typiquement compris entre 2 et 15, de préférence entre 3 et 10, pour une épaisseur totale supérieure ou égale à 0.5 mm, de préférence supérieure ou égale à 0.8 mm. L'épaisseur totale maximale pourra aller jusqu'à des valeurs de 1.5 mm, l'épaisseur maximale étant seulement limitée par les temps de production. Il y a ensuite une quatrième étape d) d'usinage, de préférence par meulage, de la face inférieure 5b de l'ébauche 5 pour révéler l'émail 3. On obtient ainsi le décor débouchant 2. Ensuite, de préférence, il y a un polissage final pour rendre la surface meulée parfaitement brillante et garantir la bonne transparence de l'émail. Optionnellement, il est également possible dans une étape e) d'usiner par meulage la face supérieure 5a pour obtenir un décor émaillé parfaitement à fleur avec le substrat. De nouveau, cet usinage peut être complété par un polissage. Dans le cas d'une pièce plate, le meulage et le polissage du dessus et du dessous peuvent être réalisés en une seule opération grâce aux machines à lapider satellitaire. Selon l'invention, la face supérieure et/ou la face inférieure peuvent être usinées selon un plan incliné pour avoir un dégradé translucide-opaque si la couche d'émail présente un aspect opaque avant usinage. On précisera que l'aspect opaque, transparent ou translucide sera dicté par la présence plus ou moins importante de pigments au sein de l'émail et par l'épaisseur de la couche.

Le procédé de fabrication selon une autre variante est illustré aux figures 1A à 1E en 6 étapes de a) à e) et à la figure 2 pour une lunette de montre. Le procédé de fabrication est globalement le même si ce n'est qu'une matière luminescente est déposée au niveau de la face supérieure 5a après le dépôt des couches d'émail de manière à former un décor en émail plique-à-jour rétroéclairé. Dans ce procédé, la face inférieure 5b est la face destinée à être visible en utilisation. Pour cette raison, la face inférieure 5b est représentée en position supérieure dans les figures. On précisera cependant qu'en pratique, la face supérieure 5a se positionne bien en position supérieure lors de l'étape de dépôt des couches d'émail pour faciliter son dépôt sans risque de coulée.

Les étapes a, b et c sont les mêmes que précédemment. Dans une quatrième étape d), une fois le décor au moins partiellement rempli d'émail et cuit, une couche de matière 4, à savoir de matière luminescente, est déposée sur l'émail 3, c.à.d. toujours depuis la face supérieure 5a de l'ébauche. Par exemple, il peut s'agir comme matière luminescente de la matière Super-LumiNova^{®} qui est un pigment phosphorescent chargé dans une laque ou une colle. Cette matière offre un large panel de couleurs d'émission avec du bleu, du vert, du violet, du blanc, du jaune, de l'orange, du rose, etc. Dans une cinquième étape e), une couche de protection 6, qui est, par exemple une laque, est déposée sur la couche de matière luminescente 4. Il y a ensuite une sixième étape f) d'usinage, de préférence par meulage, de la face inférieure 5b de l'ébauche 5 pour révéler l'émail 3. On obtient ainsi le décor débouchant 2 rétroéclairé depuis l'intérieur par la matière luminescente 4. Ensuite, il peut y avoir un polissage final pour rendre la surface meulée parfaitement brillante et garantir la bonne transparence de l'émail. La lunette ainsi obtenue est représentée à la figure 2.

Pour les deux variantes précitées, il est envisageable de réaliser les étapes de gravage et texturation lors du procédé de fabrication par exemple entre les étapes de dépôt et cuisson des couches d'émail.

Pour finir, optionnellement pour les deux variantes du procédé, une des faces ou les deux faces peuvent être soumises en plus de l'ablation laser pour le gravage et la texturation selon l'invention, à des traitements de finition tels que du satinage.

## Revendications

1. Procédé de gravage et texturation d'un article (1) comprenant un décor (2) rempli au moins partiellement avec un émail (3), ledit procédé comprenant une étape d'ablation laser à l'aide d'un laser femtoseconde ou picoseconde en surface de l'émail (3) et/ou au sein de l'émail (3) pour réaliser une structure (7).

2. Procédé de gravage et texturation selon la revendication précédente, dans lequel il s'agit d'un décor débouchant (2) rempli au moins partiellement avec l'émail (3) pour former un émail dit plique-à-jour.

3. Procédé de gravage et texturation selon l'une des revendications précédentes, comprenant une étape de remplissage de la structure (7) avec une matière (4).

4. Procédé de gravage et texturation selon l'une des revendications précédentes, dans lequel la longueur d'ondes du laser est dans le proche infra-rouge à savoir entre 700 et 2500 nm, dans le vert, à savoir entre 510 et 560 nm ou dans l'UV, à savoir entre 200 et 400 nm.

5. Procédé de gravage et texturation selon l'une des revendications précédentes, dans lequel la structure (7) au sein de l'émail (3) s'obtient en focalisant un faisceau laser (8) au sein de l'émail (3) et en générant une matrice d'impacts tandis que la structure (7) en surface nécessite de focaliser le faisceau laser (8) proche de la surface.

6. Procédé de gravage et texturation selon la revendication précédente, dans lequel le faisceau laser (8) traverse tout l'émail (3) pour réaliser une structure (7) sur une surface opposée au point d'entrée du faisceau laser (8).

7. Procédé de gravage et texturation selon l'une des revendications 4 à 6, dans lequel pour la structure (7) au sein de l'émail (3) la longueur d'ondes du laser est dans le proche infra-rouge et pour la structure (7) en surface la longueur d'ondes du laser est dans le vert.

8. Procédé de fabrication de l'article (1) comprenant le décor débouchant (2) rempli au moins partiellement avec l'émail (3) pour former l'émail dit plique-à-jour, le procédé de fabrication comprenant les étapes de gravage et texturation selon l'une des revendications 2 à 7 et comprenant avant ou pendant lesdites étapes de gravage et texturation les étapes de :
- Mise à disposition d'une ébauche (5) définie avec une face supérieure (5a) et avec une face inférieure (5b) opposée à la face supérieure (5a) ;
- Ablation d'une partie de l'ébauche (5) au niveau de la face supérieure (5a) pour réaliser un décor qui est non débouchant (2a) sur la face inférieure (5b) ou, en alternative, à l'étape précédente, mise à disposition de ladite ébauche (5) directement munie du décor non débouchant (2a) ;
- Dépôt d'une ou plusieurs couches d'émail (3) au sein du décor non débouchant (2a) et cuisson de l'émail (3) après chaque dépôt de couche ;
- Usinage, de préférence par meulage, de la face inférieure (5b) pour révéler l'émail (3) et ainsi réaliser l'article (1) avec le décor débouchant (2) rempli d'émail (3).

9. Procédé de fabrication selon la revendication précédente, dans lequel la face inférieure (5b) est la face destinée à être tournée vers un observateur en utilisation, le procédé de fabrication comprenant une étape de dépôt d'une couche de matière luminescente sur l'émail (3) après l'étape de cuisson dudit émail (3) et une étape de dépôt d'une couche de protection (6) sur la couche de matière luminescente avant l'étape d'usinage.

10. Procédé de fabrication selon l'une des revendications 8 à 9, dans lequel ladite ébauche (5) est réalisée dans un matériau ayant un point de fusion supérieur ou égal à 650°C.

11. Procédé de fabrication selon l'une des revendications 8 à 10, dans lequel le dépôt d'une ou plusieurs couches d'émail (3) est réalisé par sprayage liquide, au pinceau ou par saupoudrage d'une poudre.

12. Procédé de fabrication selon l'une des revendications 8 à 11, dans lequel le nombre de couches d'émail (3) déposées est compris entre 2 et 15, de préférence entre 3 et 10.

13. Procédé de fabrication selon l'une des revendications 8 à 12, dans lequel lors de l'étape de dépôt d'une ou plusieurs couches d'émail (3), des couches d'émail (3) de couleurs différentes sont déposées et/ou la couleur au sein d'une même couche est modulée.

14. Article (1) avec un décor (2) en émail (3), ledit décor (2) comprenant en surface et/ou au sein de l'émail (3) une structure (7).

15. Article (1) selon la revendication précédente, **caractérisé en ce que** la structure (7) est remplie d'une matière (4), ladite matière (4) étant un autre émail ou une matière distincte de l'émail (3).

16. Article (1) selon la revendication précédente, comprenant un décor débouchant (2) en émail plique-à-jour avec une épaisseur d'émail supérieure ou égale à 0.5 mm, de préférence supérieure ou égale à 0.8 mm.

17. Article (1) selon la revendication précédente, comprenant une couche de matière luminescente recouvrant l'émail (3) dans le décor (2).

18. Article (1) selon la revendication précédente, ledit article (1) étant un composant horloger d'habillage ou du mouvement.

19. Article (1) selon l'une des revendications 14 à 18, ledit article (1) étant réalisé dans une céramique, de préférence un oxyde de zirconium, un saphir ou un cermet.
